# EUROPÄISCHE PATENTANMELDUNG

(11) **EP 1 285 901 A1**
(43) Veröffentlichungstag der Anmeldung: **26.02.2003**
(21) Anmeldenummer: 01120106.8
(22) Anmeldetag: 22.08.2001
(51) Int. Cl.: C05G 3/04, C09K 17/40, C09K 17/50

(54) **Bodenverbesserungs- und Wasservitalisierungsmittel**

(71) Anmelder: Meyer, Dieter, 31542 Bad Nenndorf (DE); Braun, Hans-Peter, 31535 Neustadt (DE)
(72) Erfinder: Meyer, Dieter, 31542 Bad Nenndorf (DE); Braun, Hans-Peter, 31535 Neustadt (DE)
(74) Vertreter: Patentanwälte Thömen & Körner

(57) **Zusammenfassung**

Die Erfindung betrifft ein Bodenverbesserungsmittel aus einem Gemisch aus einer unter stetigem Rühren hergestellten wässrigen Lösung aus Natriumhydroxid, Ethansäure und 1,2,3-Propantriol und einer unter stetigem Rühren hergestellten wässrigen Lösung aus Saccharose, Kaliumhydrogentartrat und Ethansäure.

## Beschreibung

Die vorliegendende Erfindung betrifft ein Bodenverbesserungsmittel nach dem Oberbegriff des Anspruchs 1 und ein Wasservitalisierungsmittel nach Anspruch 11.

Bodenverbesserungsmittel umfassen Stoffe, die schon in relativ kleinen Mengen die allgemeine Bodenstruktur wie die Krümelung, den Lockerungsgrad, die Gasdurchlässigkeit oder die Wasserbindungsfähigkeit verbessern und damit die Bildung und Vermehrung von Mikroben fördern.

Im Unterschied dazu enthalten Düngemittel nur Nährstoffe, die die Defizite des Bodens an Mineralstoffen, Stickstoff und Phosphor ausgleichen sollen. Die Düngung hat aber keinen positiven Einfluss auf die Bodenstruktur, sondern führt vielmehr zur Verschlechterung des Bodens. Dies ist insbesondere auf die durch die Düngung verursachte Abnahme der im Boden lebenden Mikroben und höheren Lebewesen zurückzuführen. Außerdem ist als negative Begleiterscheinung einer intensiven Düngung die Anreicherung von Schadstoffen wie Nitrat im Grundwasser bekannt.

Der Einsatz von Bodenverbesserungsmitteln stellt also eine Maßnahme zur Erhaltung und Steigerung der Bodenfruchtbarkeit dar, ohne die bekannten Nachteile einer konventionellen Düngung und Bodenbearbeitung aufzuweisen. Insbesondere soll mit einem Bodenverbesserungsmittel eine Aktivierung der im Boden lebenden Mikroben erreicht werden. Die aktivierten Mikroben fördern nämlich den Stickstoffkreislauf der Pflanzen, da grundsätzlich nur sie in der Lage sind, elementaren Stickstoff aus der Luft zu binden und in pflanzenverfügbare Stickstoffverbindungen umzuwandeln. Unter den Pflanzen können lediglich Lupinen elementaren Stickstoff direkt fixieren.

Als Boden wird die oberste Schicht der Erdrinde bezeichnet, in der Verwitterungsvorgänge ablaufen, die wesentlich an der Bodenbildung beteiligt sind. In chemischer Hinsicht ist die Verwitterung vor allem durch die hohe Beweglichkeit des Wassers und durch die Beteiligung von Ionen und organischen Substanzen sowie durch pH-Änderungen gekennzeichnet. Zur biochemischen Verwitterung tragen insbesondere Pflanzenwurzeln und niedere Vertreter der Bodenflora wie Bakterien, Algen und Pilze bei.

Die oberste, meist humushaltige Schicht ist bei im biologischen Gleichgewicht befindlichen Böden reich an organischem Material und Bodenlebewesen und bildet den für die Ernährung der Pflanzen wichtigsten Teil des Bodens. Mit Humus wird allgemein die Gesamtheit der im Boden befindlichen, abgestorbenen, pflanzlichen und tierischen Substanzen bezeichnet. Die Humusbildung ist das gemeinsame Werk von Bodentieren und Mikroorganismen.

Der pH-Wert des Bodens spielt ebenfalls eine wichtige Rolle. Dem aus der Atmung der Pflanzenwurzeln resultierenden Angebot an H⁺-Ionen steht bei im biologischen Gleichgewicht befindlichen Böden eine ausgleichende Menge an Carbonaten und Bodenbasen gegenüber, die für eine Abpufferung sorgen und eine basische oder neutrale Reaktion des Boden bewirken. Solche Bodenverhältnisse werden von der Mehrzahl der Kulturpflanzen benötigt. Eine zusätzliche H⁺-Ionenzufuhr durch sauren Regen beschleunigt die Lösungsverwitterung der Carbonate und die Nährstoffauswaschung. Die Wirkungen des sauren Regens finden sich somit als Störung des ökologischen Gleichgewichts infolge Versauerung von Gewässern und Böden mit geringer Pufferkapazität.

Anreicherungen von Schwermetallsalzen können toxisch auf die Pflanzen wirken. Es ist auch bekannt, dass Schwermetalle durch eine Änderung des pH-Wertes für die Pflanzen verfügbar gemacht werden können. Insbesondere Waldpilze können erheblich Mengen an giftigen Schwermetallen wie Cadmium aufnehmen. Allgemein wird von einer sogenannten Mobilisierung der Schwermetallionen gesprochen. Diese mobilisierten Schwermetallionen können dann auch vereinfacht in das Grundwasser gelangen.

Als Bodenverbesserungsmittel im weitesten Sinne werden beispielsweise Stallmist, Gründüngung, Kalk, Humus, Torfmull, Lignin-Derivate, Alginate, Pektine, Eisensulfate, Calciumpolysulfid, Sägemehl oder Silicate eingesetzt. Nachteilig an diesen Bodenverbesserungsmitteln ist ihre nur kurze und einseitige Wirkungsweise. Sie sind nicht geeignet, der Bodenversauerung und der toxischen Belastung der Böden entgegenzuwirken oder die natürliche Humusbildung zu unterstützen. Der Einsatz von Sägemehl ist darüber hinaus in einigen Ländern verboten. Stallmist wird oft in viel zu hohen Konzentrationen eingesetzt und führt dann zu einer Überdüngung der Böden. Das ökologische Gleichgewicht der Böden kann allenfalls vorübergehend wiederhergestellt werden.

Größere Bedeutung haben daher vor allem synthetische Produkte, die aber aus Gründen des Umweltschutzes abgelehnt werden.

Wüstenböden fehlt auch bei ausreichender Wasserzufuhr häufig eine für das Pflanzenwachstum erforderliche Humusschicht. Außerdem hat sich herausgestellt, dass das zur Bewässerung eingesetzte Wasser zu schnell verdunstet oder versickert. Bei Einsatz von Salzwasser zur Bewässerung findet eine nachteilige Versalzung der Wüstenböden statt.

Eine übermäßige Bewässerung führt aber auch sonst zur Versalzung der Wüstenboden, da Salze aus den tieferen Bodenschichten in die oberen, von den Pflanzenwurzeln durchsetzten Bodenschichten übergehen.

Aus der DE 37 44 569 C1 ist ein Bodenverbesserungsmittel mit einem Gehalt an einem bodenverträglichen Elektrolyten und einem Invertzucker in einem Verhältnis von 20:1 bis 1:10 bekannt. Vorzugsweise wird als Elektrolyt Natriumacetat verwendet. Bei dem Invertzucker handelt es sich vorzugsweise um invertierte Saccharose mit einem Inversionsgrad von 55 bis 75 %, besonders bevorzugt von 60 bis 70 %. Das Bodenverbesserungsmittel liegt gemäß einer vorteilhaften Ausgestaltung der Erfindung als wässrige Lösung vor, die etwa 0,01 bis 1,0 Gew.-%, insbesondere 0,1 Gew.-% der Mischung aus Elektrolyt und Invertzucker enthält.

Ein solches Bodenverbesserungsmittel soll den Boden derart regenerieren, dass eine verbesserte Aufnahme von Nährstoffen durch die Pflanzen erzielt und die Erträge in der Landwirtschaft gesteigert werden. Nachteilig ist jedoch, dass die Nährstoffe und die Feuchtigkeit nur im geringen Maße im Boden gespeichert werden, so dass die eingebrachten Substanzen bei erneuter Bewässerung relativ schnell ausgewaschen werden.

Aus der DE 33 32 222 A1 ist ein Verfahren zur Herstellung eines Bodenimpfstoffes und ein nach dem Verfahren hergestellter Bodenimpfstoff bekannt. Als Bodenimpfstoff wird eine wässrige Lösung verwendet, die aus 60 Gew.-% Natronlauge, 30 Gew.-% Essigsäure und 10 Gew.-% Glycerin besteht. Für eine bevorzugte Mischung des Bodenimpfstoffes wird 50%ige Natronlauge, 25%ige Essigsäure und 85%iges Glycerin verwendet. Für eine andere bevorzugte Mischung des Bodenimpfstoffes wird 30%ige Natronlauge, 5%ige Essigsäure und 50%iges Glycerin verwendet.

Ein derartiger Bodenimpfstoff dient zur Neutralisation von versauerten Böden, wodurch das Wachstum der Pflanzen und Mikroorganismen verbessert werden soll.

Ausgehend von diesem Stand der Technik liegt der Erfindung die Aufgabe zugrunde, ein Bodenverbesserungsmittel anzugeben, dass das ökologische Gleichgewicht der Böden wiederherstellt.

Diese Aufgabe wird bei einem Bodenverbesserungsmittel nach dem Oberbegriff des Anspruchs 1 mit den Merkmalen des Anspruchs 1 gelöst. Weiterbildungen und vorteilhafte Ausgestaltungen der Erfindung ergeben sich aus den Unteransprüchen.

Erfindungsgemäß ist das Bodenverbesserungsmittel ein Gemisch aus einer unter stetigem Rühren hergestellten ersten wässrigen Lösung aus Natriumhydroxid, Ethansäure und 1,2,3-Propantriol und einer unter stetigem Rühren hergestellten zweiten wässrigen Lösung aus Saccharose, Kaliumhydrogentartrat und Ethansäure.

Ein derartig zur Behandlung von Böden eingesetztes Gemisch führt zu einem gegenüber den bekannten Bodenverbesserungsmitteln verstärkten Pflanzenwachstum. Obwohl die exakte Wirkung des Bodenverbesserungsmittels unbekannt ist, zeigt sich der Erfolg bereits nach wenigen Tagen anhand einer Zunahme der Konzentration des in den Pflanzen befindlichen grünen Blattfarbstoffs Chlorophyll.

Vergilbte und kranke Pflanzen können auf überraschende Weise wieder begrünt und vitalisiert werden. Daher wird das erfindungsgemäße Bodenverbessungsmittel als Bodenvitalisierungsmittel bezeichnet.

Das Bodenvitalisierungsmittel hat unter anderen einen direkten Einfluss aus den pH-Wert des Bodens und stellt innerhalb kürzester Zeit das biologische Gleichgewicht im Boden wieder her. Der Boden kann mehr Nährstoffe und Feuchtigkeit aufnehmen und über längere Zeit speichern. Außerdem wird die Gefahr der sogenannten Mobilisierung von Schwermetallionen verringert.

Eine erhöhte Aufnahme und Speicherung der Nährstoffe und Feuchtigkeit hat einerseits einen unmittelbaren Einfluss auf das Pflanzenwachstum, da die zum Pflanzenwachstum erforderlichen Stoffe über längere Zeit zur Verfügung stehen. Andererseits ist aber auch ein mittelbarer Einfluss auf das Pflanzenwachstum gegeben, der sich aus einer verstärkten Vermehrung der im Boden lebenden Tiere und Mikroorganismen ergibt. Der Boden wird praktisch vitalisiert, was zu einer erhöhten Humusbildung führt. Humus stellt dann wiederum unmittelbar einen guten Nährstoffboden für die Pflanzen dar.

Feldversuche in den Wüstengebieten von Saudi-Arabien und den Vereinigten Arabischen Emiraten haben weitere überraschende Ergebnisse geliefert. Der mit dem Bodenvitalisierungsmittel behandelte und anschließend bewässerte Wüstenboden speichert trotz intensiver Sonneneinstrahlung auch noch nach Wochen Wasser. Dadurch kann der Verbrauch des zur Bewässerung eingesetzten Wassers insgesamt verringert und einer schnellen Versalzung des Bodens entgegengewirkt werden. Die gute Speicherung des Wassers ist zunächst auf das insgesamt hygroskopisch ausgebildete System des Bodenvitalisierungsmittels zurückzuführen. Darüber hinaus sorgen die sich entwickelnden Mikroben und der sich bildende Humus für eine gute Wasserspeicherung.

Das Mischungsverhältnis der einzelnen wässrigen Lösungen ist abhängig von der Beschaffenheit der zu behandelnden Böden und lässt sich anhand einfacher Feldversuche oder Bodenanalysen bestimmen.

Das Mischungsverhältnis zwischen den beiden Lösungen sollte so bemessen sein, dass ein wirksames Puffersystem aus Essigsäure und Natriumacetat entsteht, welches sowohl gegenüber Säuren als auch Basen wirkt. Die Wirkung der im erfindungsgemäßen Bodenvitalisierungsmittel enthaltenen Puffersubstanzen beruht auf der Abfangreaktion von H⁺- bzw. OH⁻-Ionen unter Bildung schwacher Säuren bzw. Basen aufgrund ihres Dissoziationsgleichgewichts. Damit wird einer Versauerung des Bodens entgegengewirkt. Durch die Pufferung wird außerdem ein Auswaschen der teilweise als Spurenelemente dienenden Schwermetallionen vermieden. Diese Spurenelemente können dann von den Pflanzen über die Wurzeln aufgenommen werden.

Vorzugsweise beträgt das Mischungsverhältnis der ersten wässrigen Lösung zur zweiten wässrigen Lösung etwa 1:10 bis 1:50, wobei beim Mischen der Lösungen eine Temperatur von 80° C nicht überschritten werden darf.

Eine Weiterbildung sieht vor, dass beim Mischen der Lösungen Luft, reines Kohlendioxid und/oder reiner Sauerstoff in das Gemisch eingeleitet wird.

Dadurch entsteht ein Bodenvitalisierungsmittel, welches gelöstes Kohlendioxid und/oder gelösten Sauerstoff enthält. Der gelöste Sauerstoff dient zur Aktivierung der im Boden lebenden Mikroben. Durch das Einleiten von Kohlendioxid bzw. kohlendioxidhaltiger Luft in das Gemisch kann vorteilhaft ein gewünschtes Puffersystem aus Natriumcarbonat und Hydrogencarbonat eingestellt werden. Dabei reagiert das Kohlendioxid mit der im Gemisch enthaltenen Natronlauge.

Das Mischungsverhältnis der die einzelnen Lösungen bildenden Komponenten ist ebenfalls abhängig von der Beschaffenheit der zu behandelnden Böden und lässt sich anhand einfacher Feldversuche oder Bodenanalysen bestimmen. Beim Herstellen der ersten wässrigen Lösung ist vorzugsweise eine Temperatur von 40 bis 70° C und beim Herstellen der zweiten wässrigen Lösung eine Temperatur von 90 bis 120° C einzuhalten.

Saccharose dient als Nährstoff und ist Energieträger für die im Boden lebenden Tiere und Mikroorganismen. Die Saccharose soll für die Aktivierung der im Boden lebenden Tiere und Mikroorganismen zur Bildung von Humus sorgen. Der Anteil wird entsprechend den Gegebenheiten bemessen.

Eine Weiterbildung der Erfindung sieht vor, dass das Gemisch zusätzlich eine unter stetigem Rühren hergestellte dritte wässrige Lösung aus Phosphorsäure, Kaliumnitrat und Tetranatriumdiphosphat-Decahydrat sowie wenigstens einem Salz, ausgewählt aus der Gruppe der wasserlöslichen Zink-, Magnesium-, Kupfer- Eisen-, Selen- und Mangan-Salze, enthält.

Diese Stoffe werden üblicherweise im ppm-Bereich zugesetzt und bilden wichtige Nährstoffe und Spurenelemente sowohl für die Pflanzen als auch für die im Boden lebenden Tiere und Mikroorganismen. Durch das Vitalisierungsmittel wird die Bioverfügbarkeit der Stoffe erhöht.

Vorzugsweise ist das als konzentrierte wässrige Lösung vorliegende Bodenverbesserungsmittel in einer wässrigen Verdünnung von etwa 1:100 bis 1:10000 einsetzbar.

Weiterhin ist vorgesehen, dass das Bodenvitalisierungsmittel zusammen mit wenigstens einem Wirtschaftsdünger, vorzugsweise Mist, Gülle oder Kompost, und/oder wenigstens einem Handelsdünger einsetzbar ist.

Dadurch ist es möglich, nährstoffarme und trockene Böden, insbesondere Wüstenböden, auf einfache Weise ertragsfähiger zu machen. Es hat sich herausgestellt, dass das erfindungsgemäße Bodenvitalisierungsmittel die Nährstoffe des Düngemittels im Boden hält und eine verbesserte Verfügbarkeit der Nährstoffe für die Assimilation durch die Pflanzen bewirkt. Wüstenböden, die typischerweise humusarm sind, erhalten durch den Einsatz der Wirtschaftsdünger eine Grundversorgung mit humusbildenden Substanzen, beispielsweise mit unverdaulichen Pflanzenfasern.

In einer vorteilhaften Ausgestaltung der Erfindung ist das Bodenvitalisierungsmittels zusammen mit Klärschlamm einsetzbar.

Klärschlamm ist der bei der physikalischen, chemischen und biologischen Abwasserbehandlung anfallende Schlamm, wobei die Klärschlammzusammensetzung von der Abwasserbeschaffenheit und dem Abwasserbehandlungsverfahren abhängt. Üblicherweise enthält Klärschlamm Spurenelemente wie Eisen, Zink, Kupfer und Mangan sowie Nährstoffe wie Phosphat, Nitrat und Sulfat.

Klärschlamm wird normalerweise wegen seines Gehaltes an Nährstoffen als wertvoller Dünger in der Landwirtschaft eingesetzt, der jedoch nicht zu den Erträgen führt, die bei alleiniger Verwendung anderer Düngemittel erzielt werden. Es hat sich nun herausgestellt, dass bei Verwendung des erfindungsgemäßen Bodenvitalisierungsmittels zusammen mit dem Klärschlamm ein Ertrag erzielt wird, der wenigsten dem erwirtschafteten Ertrag bei alleiniger Verwendung anderer Düngemittel entspricht.

Es ist selbstverständlich, dass die gesetzlichen Vorschriften hinsichtlich der im Klärschlamm befindlichen Schadstoffe beachtet werden müssen. Allgemein bestehen aber trotzdem Bedenken, Klärschlamm als Dünger einzusetzen, da von einer Anreicherung der Schadstoffe im Boden ausgegangen wird. Durch das Bodenvitalisierungsmittel können diese sogenannten Schadstoffe wie Kupfer, Mangan oder Zink aber in bioverfügbare lebenswichtige Spurenelemente umgewandelt werden, was zu einem gesteigerten Wachstum der Pflanzen führt.

In einer gleichwirkenden Weiterbildung ist das Bodenvitalisierungsmittel zusammen mit einem flüssigen Düngemittel einsetzbar ist, wobei das flüssige Düngemittel bei der anaeroben Gärung von Biomasse, insbesondere von landwirtschaftlichen Abfällen, Gülle, Stallmist, biologisch abbaubarem Hausmüll oder Gartenabfällen entsteht.

Ein derart hergestelltes Düngemittel enthält alle humusbildenden Stoffe, die bereits vor der anaeroben Gärung in der als Ausgangsstoff dienenden Biomasse vorhanden waren. Das bei der anaeroben Gärung entstehende Methan ist vorteilhaft anderweitig als gasförmiger Energieträger nutzbar. Durch die Kombination des die humusbildenden Stoffe enthaltenen flüssigen Düngemittels mit dem erfindungsgemäßen Bodenverbesserungsmittel wird bei der Aufbringung auf einen Boden eine verbesserte Wasserspeicherung, eine verbesserte Aktivierung der im Boden lebenden Mikroben und damit auch eine Auflockerung des Bodens erreicht. Die Auflockerung bewirkt, dass Luft von der Bodenoberfläche her tiefer in die Bodenschichten eindringen kann.

Es hat sich herausgestellt, dass das Bodenvitalisierungsmittel auch einen positiven Einfluss auf den pH-Wert des flüssigen Düngemittels hat.

Aufgrund der humusbildenden Stoffe des flüssigen Düngemittels eignet sich das Gemisch insbesondere auch zur Steigerung der Bodenfruchtbarkeit von Wüstenböden. Langfristig kann so der humusarme und nur wenig Wasser speichernde Wüstenboden in einen fruchtbaren Boden umgewandelt werden. Nebenbei wird der Boden mit den für das Pflanzenwachstum erforderlichen Nährstoffen und Spurenelementen angereichert.

In einer weiteren gleichwirkenden Weiterbildung ist das Bodenvitalisierungsmittel zusammen mit Asche, vorzugsweise Holzasche, einsetzbar. Holzasche enthält wichtige Nährstoffe und Spurenelemente wie Kalium, Phosphor und Calcium.

Die vorliegende Erfindung betrifft außerdem die Verwendung des erfindungsgemäßen Bodenvitalisierungsmittel als Wasservitalisierungsmittel.

Ein derartiges Wasservitalisierungsmittel eignet sich besonders zur Wiederherstellung des biologischen Gleichgewichts in Gewässern und führt damit zu mehr Artenreichtum innerhalb der Gewässer.

Insbesondere kann aber mittels des erfindungsgemäßen Wasservitalisierungsmittel ein gesteigertes Wachstum von Wasserpflanzen, insbesondere von Algen, und von Plankton erreicht werden.

Algen sind niedere Pflanzen aus einzelnen Zellen oder Zellverbänden. Sie werden unter anderem als Nahrungsmittel genutzt oder dienen wegen ihrer Inhaltsstoffe als wertvolle Rohstoffquelle für die Gewinnung von Alginaten, Alginsäure und Carrageen, die vielfältige Anwendung finden. Voraussetzung für die wirtschaftliche Nutzung der Algen ist jedoch ihre Kultivierung, die angesichts der Belastung des Wassers teilweise nicht ohne Probleme ist. Hier greift das Wasservitalisierungsmittel ein, durch das eine Steigerung der Algenerträge erreicht wird.

Unter Plankton sind alle frei im Meer- oder Süßwasser schwebenden, meist mikroskopisch kleinen pflanzlichen und tierischen Organismen zu verstehen, die keine oder eine nur geringe Eigenbewegung besitzen. Das pflanzliche Plankton dient als Nahrung für tierisches Plankton, das seinerseits Nahrungsquelle für Fische und andere Wasserbewohner ist. Fische bilden wiederum eine Nahrungsquelle für den Menschen. Das Wasservitalisierungsmittel sorgt in diesem Fall für eine verstärkte Vermehrung von Plankton und damit für eine Zunahme der Fischbestände.

Eine vorteilhafte Ausgestaltung der Erfindung sieht vor, dass es sich bei dem zur Herstellung der Lösungen und Verdünnungen des Boden- und Wasservitalisierungsmittels verwendeten Wassers um magnetisiertes Wasser handelt.

Magnetisiertes und dadurch vitalisiertes Wasser hat eine außerordentliche Bedeutung für das Leben der Pflanzen und Tiere.

Es ist bekannt, dass es bei natürlichem Wasser aufgrund des Dipolcharakters der Wassermoleküle zu einer sogenannten Clusterbildung zwischen den Wassermolekülen kommt, welche eine positive Wirkung auf die Vitalität von Mensch, Tier und Pflanze hat. Aufgrund von im Wasser enthaltenen Verunreinigungen verändert sich aber die natürliche Clusterbildung des Wassers derart, dass die positive Wirkung gestört ist. Magnetisiertes Wasser weist diese negativen Veränderungen in der Clusterbildung nicht auf. Diese inzwischen wissenschaftlich untersuchte, aber noch nicht vollständig erklärbare Erkenntnis wird bei der vorliegenden Erfindung ausgenutzt. Durch das Herstellen der erfindungsgemäßen Lösungen, Gemische und Verdünnungen mit vitalsiertem Wasser wird eine nachhaltig positive Wirkung auf die Beschaffenheit des mit dem Mittel behandelten Bodens und Wassers erreicht.

## Patentansprüche

1. Bodenverbesserungsmittel aus einem bodenverträglichen Elektrolyten und Zucker, **dadurch gekennzeichnet, dass** das Bodenvitalisierungsmittel ein Gemisch aus einer unter stetigem Rühren hergestellten ersten wässrigen Lösung aus Natriumhydroxid, Ethansäure und 1,2,3-Propantriol und einer unter stetigem Rühren hergestellten zweiten wässrigen Lösung aus Saccharose, Ethansäure und Kaliumhydrogentartrat ist.

2. Bodenverbesserungsmittel nach Anspruch 1, **dadurch gekennzeichnet, dass** das Mischungsverhältnis zwischen der ersten wässrigen Lösung und der zweiten wässrigen Lösung etwa 1:10 bis 1:50 beträgt, wobei beim Mischen der Lösungen eine Temperatur von 80° C nicht überschritten wird.

3. Bodenverbesserungsmittel nach Anspruch 1 oder 2, **dadurch gekennzeichnet, dass** beim Mischen der Lösungen Luft, reines Kohlendioxid und/oder reiner Sauerstoff in das Gemisch eingeleitet wird.

4. Bodenverbesserungsmittel nach einem der Ansprüche 1 bis 3, **dadurch gekennzeichnet, dass** beim Herstellen der ersten wässrigen Lösung eine Temperatur von 40 bis 70° C und beim Herstellen der zweiten wässrigen Lösung eine Temperatur von 90 bis 120° C einzuhalten ist.

5. Bodenverbesserungsmittel nach einem der Ansprüche 1 bis 4, **dadurch gekennzeichnet, dass** das Gemisch zusätzlich eine unter stetigem Rühren hergestellte wässrige Lösung aus Phosphorsäure, Kaliumnitrat und Tetranatriumdiphosphat-Decahydrat sowie wenigstens einem Salz, ausgewählt aus der Gruppe der wasserlöslichen Zink-, Magnesium-, Kupfer- Eisen- und Mangan-Salze, enthält.

6. Bodenverbesserungsmittel nach einem der Ansprüche 1 bis 5, **dadurch gekennzeichnet, dass** es sich bei dem wässrigen Bodenverbesserungsmittel um eine konzentrierte Lösung handelt, die in einer wässrigen Verdünnung von 1:100 bis 1:10000 einsetzbar ist.

7. Bodenverbesserungsmittel nach einem der Ansprüche 1 bis 6, **dadurch gekennzeichnet, dass** das Bodenverbesserungsmittel zusammen mit wenigstens einem Wirtschaftsdünger, vorzugsweise Mist, Gülle oder Kompost, und/oder wenigstens einem Handelsdünger einsetzbar ist.

8. Bodenverbesserungsmittel nach einem der Ansprüche 1 bis 7, **dadurch gekennzeichnet, dass** das Bodenverbesserungsmittel zusammen mit Klärschlamm einsetzbar ist.

9. Bodenverbesserungsmittel nach einem der Ansprüche 1 bis 8, **dadurch gekennzeichnet, dass** das Bodenverbesserungsmittel zusammen mit einem flüssigen Düngemittel einsetzbar ist, wobei das flüssige Düngemittel bei der anaeroben Gärung von Biomasse, insbesondere von landwirtschaftlichen Abfällen, Gülle, Stallmist, biologisch abbaubarem Hausmüll oder von Gartenabfällen entsteht.

10. Bodenverbesserungsmittel nach einem der Ansprüche 1 bis 9, **dadurch gekennzeichnet, dass** das Bodenverbesserungsmittel zusammen mit Asche, vorzugsweise Holzasche, einsetzbar ist.

11. Verwendung des Bodenverbesserungsmittels nach einem der Ansprüche 1 bis 10 als Wasservitalisierungsmittel.

12. Bodenverbesserungsmittel nach einem der Ansprüche 1 bis 10 oder Wasservitalisierungsmittel nach Anspruch 11, **dadurch gekennzeichnet, dass** es sich bei dem zur Herstellung der Lösungen und Verdünnungen verwendeten Wasser um magnetisiertes Wasser handelt.
